# EUROPÄISCHE PATENTSCHRIFT

(11) **EP 3 152 096 B1**
(45) Veröffentlichungstag und Bekanntmachung des Hinweises auf die Patenterteilung: **07.07.2021**
(21) Anmeldenummer: 15725014.3
(22) Anmeldetag: 27.05.2015
(51) Int. Cl.: B62D 5/04, H02P 29/02

(54) **VORRICHTUNG ZUR ANSTEUERUNG UND/ODER ÜBERWACHUNG EINES BÜRSTENLOSEN GLEICHSTROMMOTORS**
DEVICE FOR ACTUATING AND/OR MONITORING A BRUSHLESS DIRECT CURRENT MOTOR
DISPOSITIF D'EXCITATION ET/OU DE SURVEILLANCE D'UN MOTEUR À COURANT CONTINU SANS BALAIS

(30) Priorität: 04.06.2014 DE 102014210653
(43) Veröffentlichungstag der Anmeldung: 12.04.2017
(73) Patentinhaber: Conti Temic microelectronic GmbH, 90411 Nürnberg (DE)
(72) Erfinder: ARABACKYJ, Marc, 90408 Nürnberg (DE); GÜRTLER, Thomas, 90480 Nürnberg (DE); HÜMMRICH, Thomas, 96364 Marktrodach (DE); KUHN, Mathias, 90542 Eckental (DE); LOERINCZ, Robert Istvan, R-300414 Timisoara (RO); PSCHORR, Andreas, 93053 Regensburg (DE)
(74) Vertreter: Continental Corporation
(86) Internationale Anmeldenummer: PCT/EP2015/061729
(87) Internationale Veröffentlichungsnummer: WO 2015/185417

(56) Entgegenhaltungen:
- EP-A1- 2 559 985
- WO-A1-2014/057671
- WO-A2-2009/121352
- WO-A2-2015/100214
- RÓBERT ISTVÁN LÖRINCZ: "Hardware Implementation of BLDC Motor Diagnosis", Recent Researches in Circuits, Systems and Signal Processing , 14. Juli 2011 (2011-07-14), XP002744458, Gefunden im Internet: URL:http://www.wseas.us/e-library/conferen ces/2011/Corfu/CIRCS/CIRCS-35.pdf [gefunden am 2015-09-14]
- None

## Beschreibung

Die Erfindung betrifft eine Vorrichtung zur Ansteuerung und/oder zur Überwachung eines bürstenlosen Gleichstrommotors, vorzugsweise für sicherheitsrelevante Anwendungen, beispielsweise nach der Norm IEC 61508 oder ISO 26262, vorzugsweise beim Betrieb oder der Steuerung eines Fahrzeugs oder von Komponenten eines Fahrzeugs. Die Erfindung betrifft ferner ein Verfahren zur zuverlässigen Überprüfung der Funktionsfähigkeit einer solchen Vorrichtung.

In bürstenlosen Gleichstrommotoren wird ein kontinuierlich oder inkrementell drehendes magnetisches Feld durch phasenverschobene Ansteuerung von Statorspulen mittels einer Umrichterschaltung erzeugt. Beispielsweise werden von drei Statorspulen in einer aus dem Stand der Technik bekannten Sechsschritt-Ansteuerung immer zwei Statorspulen bestromt, während eine dritte, von Schritt zu Schritt wechselnde Statorspule unbestromt bleibt. Eine solche Sechsschritt-Ansteuerung kann mittels einer als B6 - Brücke aus dem Stand der Technik bekannten Umrichterschaltung erzeugt werden. Eine solche B6 - Brücke umfasst drei parallel zwischen eine Versorgungsspannung geschaltete Paare von elektronisch gesteuerten Schaltelementen, beispielsweise Feldeffekt-Transistoren (FET). Jedes der parallel geschalteten Paare von Schaltelementen umfasst zwei in Reihe geschaltete Schaltelemente, die wechselweise geöffnet werden, wobei eine Statorspulenversorgungsspannung jeweils an der Verbindung der beiden in Reihe geschalteten Schaltelemente abgegriffen wird und jeweils eine Statorspule versorgt.

Die WO 2014/057671 A1 beschreibt eine Vorrichtung zum Erfassen einer physikalischen Größe, umfassend einen Detektor für physikalische Größen und ein Steuergerät, wobei das Steuergerät eine Anormalitätsbestimmungseinheit aufweist, die konfiguriert ist, um die Anomalie des Übertragungssystems zwischen dem Steuergerät und dem Detektor auf der Basis eines Diagnosesignals zu bestimmen, wenn das Diagnosesignal empfangen wird.

Die EP 2 559 985 A1 beschreibt ein Anomaliediagnoseverfahren für eine Drehmomenterfassungsvorrichtung, die eine Überwachungsfunktion zum ständigen Überwachen eines Drehmomentsensorsignals und eines entsprechenden Verarbeitungssystems aufweist.

Der Erfindung liegt die Aufgabe zu Grunde, eine Vorrichtung zur Ansteuerung elektronischer Schaltelemente einer Umrichterschaltung anzugeben, mit welcher eine fehlerhafte oder versagende Ansteuerung des bürstenlosen Gleichstrommotors zuverlässig erkannt wird. Der Erfindung liegt ferner die Aufgabe zu Grunde, ein Verfahren zur Ansteuerung elektronischer Schaltelemente einer Umrichterschaltung anzugeben, mit welchem eine fehlerhafte oder versagende Ansteuerung des bürstenlosen Gleichstrommotors in sicherheitsrelevanten Anwendungen, beispielsweise nach der Norm IEC 61508 oder ISO 26262, zuverlässig erkannt wird.

Hinsichtlich der Vorrichtung wird die Aufgabe durch die Merkmale des Anspruchs 1 gelöst. Hinsichtlich des Verfahrens wird die Aufgabe durch die Merkmale des Anspruchs 8 gelöst.

Vorteilhafte Ausgestaltungen der Erfindung sind Gegenstand der Unteransprüche.

Die erfindungsgemäße Vorrichtung zur Ansteuerung und/oder Überwachung einer Umrichterschaltung zur Ansteuerung eines bürstenlosen Gleichstrommotors für sicherheitsrelevante Anwendungen umfasst
- eine Abschaltvorrichtung,
- eine Treiberschaltung sowie
- eine prüfbare Diagnoseeinheit.

Die Vorrichtung wird mittels eines Steuersignals von einer Motorsteuereinheit angesteuert. Das Steuersignal kann bidirektional ausgebildet sein, so dass Informationen von der Motorsteuerung an die Vorrichtung und/oder Informationen von der Vorrichtung an die Motorsteuereinheit gesendet werden können. Beispielsweise können von der Motorsteuereinheit mittels des Steuersignals Drehrichtung und Drehgeschwindigkeit des bürstenlosen Gleichstrommotors vorgegeben werden. Es ist auch möglich, dass an die Motorsteuereinheit Signale von Lagegebern übermittelt werden, die die Lage und/oder den Bewegungszustand des bürstenlosen Gleichstrommotors beschreiben.

Ein auf einer Abschaltsignaleingangsleitung eingehendes externes Abschaltsignal wird an die Abschaltvorrichtung übermittelt. Die Abschaltvorrichtung wirkt auf die Treiberschaltung und versetzt bei einem eingehenden externen Abschaltsignal diese Treiberschaltung, und mittels der Treiberschaltung auch den bürstenlosen Gleichstrommotor in einen sicheren Zustand. Ein sicherer Zustand ist anwendungsabhängig beispielsweise durch einen gebremsten oder durch einen frei laufenden Rotor des bürstenlosen Gleichstrommotors erreicht.

Die Treiberschaltung ist mit der Umrichterschaltung und der prüfbaren Diagnoseeinheit verbindbar. Die Treiberschaltung steuert Schaltelemente der Umrichterschaltung so an, dass eine mittels des Steuersignals von der Motorsteuereinheit vorgegebene Drehgeschwindigkeit und Drehrichtung des bürstenlosen Gleichstrommotors erzielt wird.

Die prüfbare Diagnoseeinheit überwacht Parameter von Komponenten der Vorrichtung und/oder Parameter der Umrichterschaltung und/oder Parameter des bürstenlosen Gleichstrommotors . Indem ein überwachter Parameter mit dem Arbeitswert mindestens eines Grenzwerts verglichen wird, wird ein Ausfall der Vorrichtung und/oder der Umrichterschaltung und/oder des bürstenlosen Gleichstrommotors als positiver Fehlerzustand erkannt.

Mittels eines von der Motorsteuereinheit an die prüfbare Diagnoseeinheit gesendeten Prüfkommandos wird ein Fehlerzustand ermittelt und an die Motorsteuereinheit übertragen, der die Funktionsfähigkeit, insbesondere eine Fehlfunktion, der prüfbaren Diagnoseeinheit beschreibt.

In einer Ausführungsform der Erfindung umfasst die erfindungsgemäße Vorrichtung eine zuverlässige Kommunikationseinheit, die mit der prüfbaren Diagnoseeinheit koppelbar ist. Mittels der zuverlässigen Kommunikationseinheit übermittelt die prüfbare Diagnoseeinheit Werte überwachter Parameter des bürstenlosen Gleichstrommotors und/oder einen Fehlerzustand an die Motorsteuereinheit, welche bei einem positiven Fehlerzustand ein externes Abschaltsignal generiert. Mittels der zuverlässigen Kommunikationseinheit kann zudem ein Prüfkommando zur Prüfung der prüfbaren Diagnoseeinheit und/oder ein auf ein solches Prüfkommando hin ermittelter Fehlerstatus der prüfbaren Diagnoseeinheit übermittelt werden.

Die zuverlässige Kommunikationseinheit kann beispielsweise als Kommunikationseinheit ausgebildet sein, mit welcher aufeinander folgende Bits eines binären Signals in Datenpakete unterteilt werden, wobei gesendete Datenpakete um eine Prüfsumme ergänzt und wobei bei empfangenen Datenpaketen eine Prüfsumme überprüft wird. In vorteilhafter Weise kann mittels der Prüfsumme ein fehlerhaft übertragener Bitwert in einem Datenpaket erkannt werden. Dem Fachmann sind Verfahren zur Generierung und Prüfung von Prüfsummen bekannt, mit welchen auch mehrfache Bitfehler in einem Datenpaket erkennbar und/oder korrigierbar sind.

Die zuverlässige Kommunikationseinheit kann alternativ oder zusätzlich gesendete Datenpakete mit einer Paketidentifizierung versehen und/oder eine Paketidentifizierung empfangener Datenpakete überprüfen. Beispielsweise ist es möglich, gesendete Datenpakete mit einer fortlaufend inkrementierten variablen ersten Ganzzahl zu versehen, welche zur Begrenzung auf einen endlichen Wertebereich einer Modulooperation mit einer festen zweiten Ganzzahl, beispielsweise dem Wert 256, unterzogen wird.

In analoger Weise ist es möglich, die Paketidentifizierung eines empfangenen Datenpakets zu verifizieren. Weicht die übermittelte Paketidentifizierung von der tatsächlich empfangenen Paketidentifizierung ab, so sind hiermit beispielsweise eine fehlerhaft wiederholte Paketübermittlung oder der Verlust eines Datenpakets erkennbar. Dem Fachmann sind weitere Verfahren zur Generierung und Überprüfung von Paketidentifizierungen bekannt. In vorteilhafter Weise kann so die Integrität von mittels der zuverlässigen Kommunikationseinheit übertragenen Daten, wie beispielsweise Messwerten von mittels der prüfbaren Diagnoseeinheit überwachten Parametern oder einem von der prüfbaren Diagnoseeinheit generierten Fehlerstatus, geprüft werden. Somit ist die Wahrscheinlichkeit, dass ein fehlerhafter und/oder unsicherer Zustand des bürstenlosen Gleichstrommotors nicht an die Motorsteuereinheit übertragen wird, im Vergleich zu den aus dem Stand der Technik bekannten Vorrichtungen zur Übertragung eines Steuersignals erheblich verringert und somit die Sicherheitsintegrität erheblich verbessert.

Die Funktionsfähigkeit der prüfbaren Diagnoseeinheit kann mittels eines über das Steuersignal von der Motorsteuereinheit gesendeten Prüfkommandos geprüft werden. Schlägt eine Prüfung der Funktionsfähigkeit der prüfbaren Diagnoseeinheit fehl, so wird mittels der zuverlässigen Kommunikationseinheit ein positiver Fehlerzustand an die Motorsteuereinheit übermittelt. Dieser positive Fehlerzustand führt ebenso zur Generierung eines externen Abschaltsignals durch die Motorsteuereinheit.

In vorteilhafter Weise wird mit der erfindungsgemäßen Vorrichtung durch den Einsatz einer prüfbaren Diagnoseeinheit ein sicherer Betrieb eines bürstenlosen Gleichstrommotors erzielt. Beispielsweise ist es möglich, einen Betrieb gemäß den Anforderungen eines in der Norm ISO 26262-3 Automotive Safety Integrity Level (ASIL) beschriebenen Sicherheitsintegrität wie ASIL-A, ASIL-B, ASIL-C oder ASIL-D zu erzielen, auch wenn die Komponenten der Vorrichtung und/oder die Umrichterschaltung und/oder der bürstenlose Gleichstrommotor für sich genommen den Anforderungen einer solchen Sicherheitsintegrität nicht genügen würde. In vorteilhafter Weise ist damit eine sichere und dennoch Kosten sparende Umsetzung einer Ansteuerung eines bürstenlosen Gleichstrommotors möglich.

In einer Ausführungsform der Erfindung überwacht die prüfbare Diagnoseeinheit den Schaltzustand der Umrichterschaltung. Somit erkennt die prüfbare Diagnoseeinheit ausgefallene Schaltelemente in der Umrichterschaltung. In dieser Ausführungsform der Erfindung können in vorteilhafter Weise auch Technologien zur Herstellung solcher Schaltelemente verwendet werden, welche zwar kostengünstig sind, aber für sich genommen nicht den Anforderungen an einen gewünschten Sicherheitsintegrität genügen. Beispielsweise können FETs als Schaltelemente in der Umrichterschaltung verwendet werden.

In einer Ausführungsform der Erfindung überwacht die prüfbare Diagnoseeinheit die Funktionsfähigkeit von mindestens einem Lagegeber, mit dem der Drehwinkel und/oder die Drehgeschwindigkeit eines Rotors des bürstenlosen Gleichstrommotors bestimmbar ist. In einer Ausführungsform der Erfindung ist der mindestens eine Lagegeber als Hall-Sensor ausgebildet. Hall-Sensoren sind kostengünstig herstellbar, gut integrierbar und eignen sich gut zur Erkennung eines magnetischen Felds und somit zur Lageerkennung eines dauermagnetischen Rotors in einem bürstenlosen Gleichstrommotor.

In einer Ausführungsform der Erfindung überwacht die prüfbare Diagnoseeinheit die Temperatur von mindestens einem Bauelement der Vorrichtung. Ein Ausfall eines Bauelements, beispielsweise eines Schaltelements, oder ein Kurzschluss führt oft zu einem unerwünscht hohen Stromfluss und somit zu einer Erwärmung der Umgebung eines ausgefallenen Bauelements über eine normale, vorgesehene Betriebstemperatur hinaus. In dieser Ausführungsform der Erfindung können solche Ausfälle frühzeitig erkannt werden. Ferner ist es in vorteilhafter Weise möglich zu erkennen, ob ein sicherer Betrieb der Vorrichtung weiter möglich ist. So kann ein Ausfall oder ein unsicherer Betrieb des bürstenlosen Gleichstrommotors bedingt durch eine Verletzung der Spezifikationsgrenzen für die Einsatztemperaturen von Bauelementen, beispielsweise hervorgerufen durch eine zu hohe Umgebungstemperatur oder durch einen Ausfall einer Entwärmevorrichtung, vermieden werden.

In einer Ausführungsform der Erfindung überwacht die prüfbare Diagnoseeinheit mindestens eine Versorgungsspannung und/oder mindestens eine Ausgangsspannung und/oder mindestens eine Versorgungsspannung der Umrichterschaltung. In vorteilhafter Weise lässt sich mit dieser Ausführungsform ein Ausfall oder ein unsicherer Betrieb des bürstenlosen Gleichstrommotors bedingt durch eine Verletzung von Spezifikationsgrenzen für die Versorgungsspannungen von Bauelementen, beispielsweise hervorgerufen durch den Ausfall eines Spannungswandlers, vermeiden.

Ein Verfahren zur Überprüfung einer prüfbaren Diagnoseeinheit in einer Vorrichtung zur Ansteuerung eines bürstenlosen Gleichstrommotors umfasst
- in einem ersten Verfahrensschritt die Ausführung eines von der Motorsteuereinheit an die prüfbare Diagnoseeinheit übermittelten Prüfkommandos, umfassend die Einstellung eines Testwerts für mindestens einen zu einem überwachten Parameter korrespondierenden Grenzwert,
- in einem darauf folgenden zweiten Verarbeitungsschritt die Übermittlung eines Fehlerzustands von der prüfbaren Diagnoseeinheit an die Motorsteuereinheit, wobei ein positiver Fehlerzustandswert die Überschreitung mindestens eines Grenzwerts eines überwachten Parameters bezeichnet,
- in einem darauf folgenden ersten Entscheidungsschritt die Erkennung einer Fehlfunktion der prüfbaren Diagnoseeinheit bei einem nicht positiven Fehlerzustandswert,
- in einem dritten Verarbeitungsschritt das Rücksetzen des Fehlerzustandes auf einen nicht positiven Fehlerzustandswert und das Rücksetzen des mindestens einen Grenzwerts eines überwachten Parameters auf einen Arbeitswert,
- in einem darauf folgenden vierten Verarbeitungsschritt die Übermittlung des Fehlerzustandes von der prüfbaren Diagnoseeinheit an die Motorsteuereinheit,
- in einem darauf folgenden dritten Entscheidungsschritt die Erkennung einer Fehlfunktion der prüfbaren Diagnoseeinheit bei einem positiven Fehlerzustandswert und
- in einem darauf folgenden fünften Verarbeitungsschritt das Setzen eines erfolgreichen Prüfzustands.

Mit dem erfindungsgemäßen Verfahren wird im ersten Verfahrensschritt ein Zustand provoziert, der von einer funktionsfähigen prüfbaren Diagnoseeinheit als positiver Fehlerzustand erkennbar ist. Im ersten Entscheidungsschritt wird überprüft, ob die prüfbare Diagnoseeinheit einen solchen positiven Fehlerzustand tatsächlich erkannt hat. Bleibt diese Erkennung eines positiven Fehlerzustands aus, so ist die Funktionsfähigkeit der prüfbaren Diagnoseeinheit nicht sichergestellt. Bei einem solchen Ausfall der prüfbaren Diagnoseeinheit kann mittels eines externen Abschaltsignals und/oder mittels von der Motorsteuereinheit über das Steuersignal übertragener Parameter ein sicherer Zustand, beispielsweise ein Stillstand, des bürstenlosen Gleichstrommotors herbeigeführt werden. Somit wird, insbesondere durch regelmäßige Wiederholung des erfindungsgemäßen Verfahrens zur Überprüfung der prüfbaren Diagnoseeinheit, die Sicherheitsintegrität beim Betrieb des bürstenlosen Gleichstrommotors im Vergleich zu Diagnoseeinheiten nach dem Stand der Technik erheblich verbessert, so dass eine aus dem Stand der Technik bekannte parallele Überwachung einer solchen prüfbaren Diagnoseeinheit unnötig wird. Es ist ferner möglich, für die prüfbare Diagnoseeinheit selbst, aber auch für weitere, mit der prüfbaren Diagnoseeinheit für die Ausführung ihrer Überwachungsfunktion verbundenen Bauelemente, beispielsweise Temperatur- oder Spannungssensoren, Herstellungstechnologien einzusetzen, welche für sich genommen die notwendigen Voraussetzungen für ein gewünschtes Zuverlässigkeitsniveau nicht erfüllen. Das erfindungsgemäße Verfahren ermöglicht somit auch die Herstellung einfacherer und kostengünstigerer Ansteuerungen für bürstenlose Gleichstrommotoren als nach dem Stand der Technik bekannt, welche das gewünschte Zuverlässigkeitsniveau erfüllen.

In einer Ausführungsform umfasst das erfindungsgemäße Verfahren in einem auf den ersten Entscheidungsschritt folgenden zweiten Entscheidungsschritt die Erkennung einer Fehlfunktion der prüfbaren Diagnoseeinheit, wenn der Zeitabstand zwischen der Übermittlung des Prüfkommandos im ersten Verfahrensschritt und der Übermittlung eines positiven Fehlerzustands von der prüfbaren Diagnoseeinheit an die Motorsteuereinheit im zweiten Verfahrensschritt außerhalb eines vorbestimmten Bereichs von Zeitabständen liegt. In vorteilhafter Weise ist es mit dieser Ausführungsform der Erfindung möglich, einen positiven Fehlerzustand, der nicht als Folge des übermittelten Prüfkommandos ermittelt wurde, zu erkennen.

Beispielsweise ist es möglich, dass eine prüfbare Diagnoseeinheit mit ausgefallener Temperaturüberwachung auf ein Prüfkommando, welches den oberen Grenzwert einer überwachten Temperatur auf einen Wert unterhalb der normalen Betriebstemperatur absenkt, zunächst keinen positiven Fehlerstatus übermittelt. In einigen Situationen kann die Überwachung eines anderen Parameters, beispielsweise einer Versorgungsspannung, weiterhin funktionieren. Dann kann zufällig aufgrund einer tatsächlich auftretenden Über- oder Unterspannung ein positiver Fehlerstatus generiert werden, der fälschlich für die erwartete Antwort auf das Prüfkommando zur Überprüfung der prüfbaren Diagnoseeinheit gehalten wird. Durch die erfindungsgemäße Eingrenzung des zeitlichen Abstands zum Übermittlungszeitpunkt des Prüfkommandos, innerhalb dessen ein übermittelter positiver Fehlerstatus als korrespondierend zum Prüfkommando und somit als eine Funktionsfähigkeit der prüfbaren Diagnoseeinheit nachweisend angesehen wird, ist die Wahrscheinlichkeit einer fälschlich als funktionsfähig diagnostizierten prüfbaren Diagnoseeinheit erheblich reduziert. Somit wird mit dieser Ausführungsform der Erfindung die Sicherheitsintegrität der Vorrichtung verbessert.

In einer Ausführungsform umfasst das erfindungsgemäße Verfahren mindestens eine Wiederholung des ersten Verfahrensschritts und aller nachfolgenden Verfahrens- und Entscheidungsschritte. In vorteilhafter Weise ist es damit möglich, eine prüfbare Diagnoseeinheit regelmäßig, beispielsweise in vorbestimmten Zeitabständen, zu prüfen. Damit lässt sich erreichen, dass ein Ausfall der prüfbaren Diagnoseeinheit, und somit potenziell ein Ausfall oder eine Fehlfunktion des bürstenlosen Gleichstrommotors, spätestens nach einer vorbestimmten Zeit erkannt wird. Somit ist ein besonders sicherer dauerhafter Betrieb eines bürstenlosen Gleichstrommotors ermöglicht.

Weitere Details und Ausführungsbeispiele der Erfindung werden im Folgenden anhand von Zeichnungen näher erläutert.

Dabei zeigen:
- Figur 1: schematisch den Aufbau einer Vorrichtung zur Ansteuerung einer Umrichterschaltung nach dem Stand der Technik,
- Figur 2: schematisch den Kontrollfluss zur Überwachung einer Umrichterschaltung nach dem Stand der Technik,
- Figur 3: schematisch den Aufbau einer erfindungsgemäßen Vorrichtung zur Ansteuerung einer Umrichterschaltung,
- Figur 4: schematisch den Kontrollfluss zur Überwachung einer erfindungsgemäßen Vorrichtung zur Ansteuerung einer Umrichterschaltung sowie
- Figur 5 und Figur 6: schematisch den Ablauf des erfindungsgemäßen Verfahrens zur Überwachung der Ansteuerung einer Umrichterschaltung.

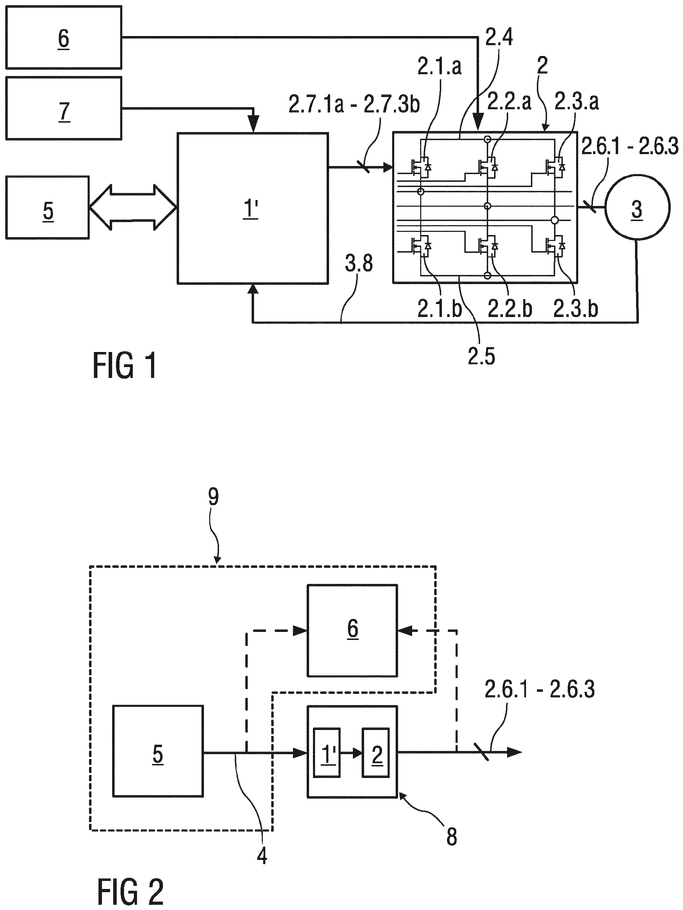

Figur 1 zeigt schematisch eine Umrichterschaltung 2 für einen bürstenlosen Gleichstrommotor 3 mit drei nicht näher dargestellten Statorspulen, welche von einer Ansteuervorrichtung 1' nach dem Stand der Technik angesteuert wird.

Die Umrichterschaltung 2 umfasst drei plusseitige Feldeffekttransistoren (FETs) 2.1.a, 2.2.a, 2.3.a und drei minusseitige FETs 2.1.b, 2.2.b, 2.3.b, die in der Art einer B6 - Brücke geschaltet sind, wobei jeweils ein plusseitiger FET 2.1.a, 2.2.a, 2.3.a und ein minusseitiger FET 2.1.b, 2.2.b, 2.3.b in Reihe zwischen einer positiven Versorgungsspannungsleitung 2.4 und einer negativen Versorgungsspannungsleitung 2.5 geschaltet sind. An der Verbindung zwischen einem plusseitigen FET 2.1.a, 2.2.a, 2.3.a und einem minusseitigen FET 2.1.b, 2.2.b, 2.3.b ist je eine Spulenversorgungsleitung 2.6.1 bis 2.6.3 angeschlossen, die jeweils eine Statorspule des bürstenlosen Gleichstrommotors 3 bestromt.

Die FETs 2.1.a bis 2.3.b der Umrichterschaltung 2 werden durch die Ansteuervorrichtung 1' nach dem Stand der Technik so gesteuert, das im zeitlichen Wechsel jeweils eine der drei Spulenversorgungsleitungen 2.6.1 bis 2.6.3 unbestromt ist. Durch die Reihenfolge und die Geschwindigkeit des Wechsels der unbestromten Spulenversorungsleitung 2.6.1 bis 2.6.3 werden die Drehrichtung und die Drehgeschwindigkeit des Magnetfeldes gesteuert, das im bürstenlosen Gleichstrommotor 3 mittels der Statorspulen aufgebaut wird.

Hierzu stellt die Ansteuervorrichtung 1' nach dem Stand der Technik sechs Steuerspannungen zur Ansteuerung der FETs 2.1.a bis 2.3.b bereit, die auf sechs Ansteuerleitungen 2.7.1a bis 2.7.3b übertragen werden. Der zeitliche Ablauf dieser sechs Steuerspannungen wird durch ein in Figur 2 dargestelltes Steuersignal 4 bestimmt, über welches eine Motorsteuereinheit 5 mit der Ansteuervorrichtung 1' nach dem Stand der Technik kommuniziert. Beispielsweise kann ein solches Steuersignal 4 eine aus dem Stand der Technik als Serial Peripheral Interface (SPI) bekannte Schnittstelle umfassen, über welche Daten und/oder Kommandos an die Ansteuervorrichtung 1' nach dem Stand der Technik eingespeist werden. Ein solches Steuersignal 4 kann ferner ein pulsweitenmoduliertes Signal umfassen, welches parallel zu einer solchen SPI Schnittstelle übertragen wird und bei welchem eine Folge von Pulsen den zeitlichen Ablauf der sechs Steuerspannungen zur Ansteuerung der FETs 2.1.a bis 2.3.b steuert.

Der zeitliche Ablauf dieser sechs Steuerspannungen wird ferner durch ein Rotorstatussignal bestimmt, das über eine Rotorstatusleitung 3.8 vom bürstenlosen Gleichstrommotor 3 an die Ansteuervorrichtung 1' nach dem Stand der Technik übertragen wird und das die Position und/oder die Drehgeschwindigkeit des Rotors beschreibt.

Durch das Versagen eines oder mehrerer FETs 2.1.a bis 2.3.b ist es möglich, dass der Umrichter 2 den bürstenlosen Gleichstrommotor 3 falsch ansteuert oder sogar zerstört. Aus diesem Grund wird bei aus dem Stand der Technik bekannten Anordnungen der Umrichter 2 mittels einer Diagnoseeinheit 6' nach dem Stand der Technik überwacht.

Um ein sicheres Abschalten des bürstenlosen Gleichstrommotors 3 zu gewährleisten, beispielsweise auch bei einer Störung des Steuersignals 4 oder der für dieses Steuersignal 4 verwendeten Schnittstelle, ist eine Abschaltvorrichtung 7 zur Generierung eines Abschaltsignals mit der Ansteuervorrichtung 1' nach dem Stand der Technik verbunden. Liegt ein Abschaltsignal an der Ansteuervorrichtung 1' nach dem Stand der Technik an, so wird dieselbe in einen sicheren Zustand versetzt und generiert Steuerspannungen für die FETs 2.1.a bis 2.3.b derart, dass die Umrichterschaltung 2 und der bürstenlose Gleichstrommotor 3 ebenfalls in einen sicheren Zustand versetzt werden.

Figur 2 zeigt schematisch den Kontrollfluss für eine aus dem Stand der Technik bekannte Überwachung der Ansteuerung eines bürstenlosen Gleichstrommotors 3. Entlang eines ungesicherten Kontrollpfades 8, umfassend die Ansteuervorrichtung 1' nach dem Stand der Technik und die Umrichterschaltung 2, werden Spannungen zur Bestromung der Statorspulen generiert, die über die Spulenversorgungsleitungen 2.6.1 bis 2.6.3 auf den bürstenlosen Gleichstrommotor 3 übertragen werden. Parallel zu dem ungesicherten Kontrollpfad 8 wird entlang eines gesicherten Kontrollpfades 9, umfassend die Motorsteuereinheit 5 sowie die Diagnoseeinheit 6' nach dem Stand der Technik, geprüft, ob die tatsächliche Ansteuerung des bürstenlosen Gleichstrommotors 3 mit der von der Motorsteuereinheit 5 über das Steuersignal 4 angeforderten Ansteuerung übereinstimmt.

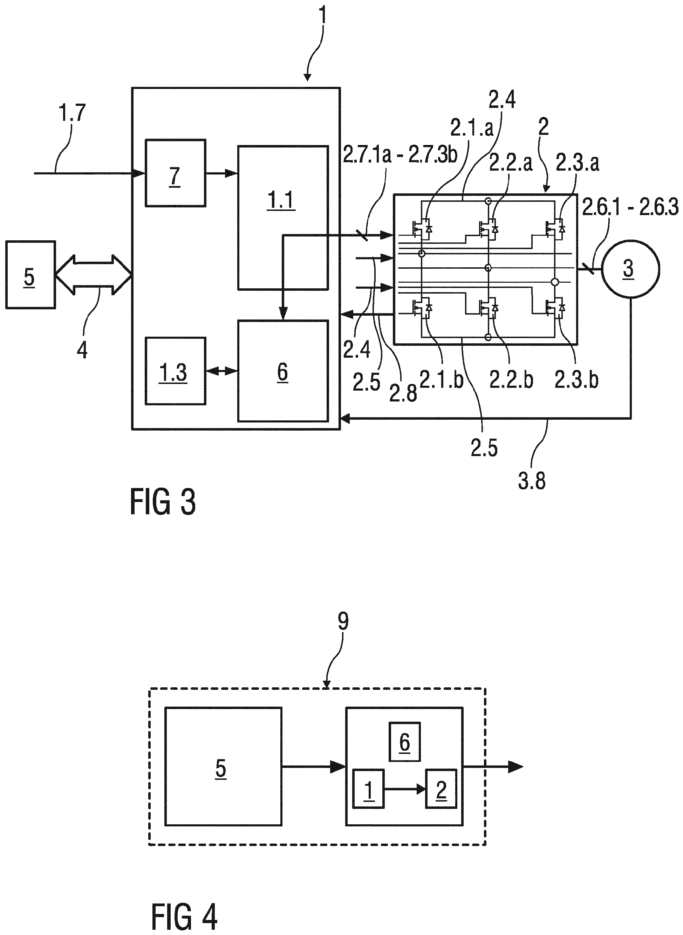

Figur 3 zeigt schematisch den Aufbau einer erfindungsgemäßen Vorrichtung 1 zur Ansteuerung und/oder Überwachung einer Umrichterschaltung 2 zur Ansteuerung eines bürstenlosen Gleichstrommotors 3. Die Vorrichtung 1 umfasst eine Treiberschaltung 1.1 zur Erzeugung von Steuerspannungen, die mittels Ansteuerleitungen 2.7.1a bis 2.7.3b die FETs 2.1.a bis 2.3.b der Umrichterschaltung 2 ansteuern. Die Vorrichtung 1 umfasst ferner eine prüfbare Diagnoseeinheit 6, eine zuverlässige Kommunikationseinheit 1.3 sowie eine Abschaltvorrichtung 7.

Die Vorrichtung 1 kommuniziert mittels eines Steuersignals 4 mit der Motorsteuereinheit 5. Die Motorsteuereinheit 5 kann beispielsweise als Mikrocontroller ausgebildet sein. Das Steuersignal 4 kann beispielsweise mittels einer SPI Schnittstelle an die Vorrichtung 1 übertragen werden. Es ist möglich, dass ein Steuersignal 4 bidirektional übertragen wird, wobei mindestens ein erstes Element eines Steuersignals 4 von der Motorsteuereinheit 5 gesendet wird und mindestens ein zweites Element eines Steuersignals 4 von der Vorrichtung 1 gesendet wird. Die Vorrichtung 1 ist ferner für den Empfang eines externen Abschaltsignals mittels einer Abschaltsignaleingangsleitung 1.7 vorgesehen.

Die Vorrichtung 1 empfängt von der Umrichterschaltung 2 über eine Umrichterstatusleitung 2.8 ein Umrichterstatussignal, das Parameterwerte der Umrichterschaltung 2 beschreibt, wie beispielsweise eine Versorgungs- und/oder Steuerspannung und/oder eine Temperatur.

Es ist möglich, dass die Vorrichtung 1 vom bürstenlosen Gleichstrommotor 3 mittels einer Rotorstatusleitung 3.8 ein Rotorstatussignal empfängt, das mittels Parameterwerten für mindestens einen Lagegeber die Position des Rotors des bürstenlosen Gleichstrommotors 3 beschreibt. Dem Fachmann sind aus dem Stand der Technik Vorrichtungen und Verfahren zur Gewinnung eines solchen Rotorstatussignals bekannt, beispielsweise mittels in den Stator integrierter Hall-Sensoren, mittels fotoelektrischer Lagegeber oder mittels induktiver Lagegeber.

Im Folgenden wird die prinzipielle Funktionsweise der Vorrichtung 1 beschrieben.

Aus dem Steuersignal 4 werden in der Treiberschaltung 1.1 fortlaufend Steuerspannungen zur Ansteuerung der FETs 2.1.a bis 2.3.b der Umrichterschaltung 2 erzeugt.

Zugleich überprüft die prüfbare Diagnoseeinheit 6 durch Vergleich von fortlaufend ermittelten Werten mindestens eines überwachten Parameters gegen mindestens einen vorbestimmten, zu diesem Parameter korrespondierenden Arbeitswert eines Grenzwerts die korrekte Funktion der Vorrichtung 1 und/oder der Umrichterschaltung 2 und/oder des bürstenlosen Gleichstrommotors 3. Beispielsweise überprüft die prüfbare Diagnoseeinheit 6, ob eine vorbestimmte Höchsttemperatur für einen Messpunkt der Treiberschaltung 1.1 überschritten wird und/oder ob ein vorbestimmter zulässiger Spannungsbereich für eine Versorgungsspannung der Treiberschaltung 1.1 verletzt wird.

Auftreten und, optional, Art und Umfang einer Störung werden von der prüfbaren Diagnoseeinheit 6 mittels der zuverlässigen Kommunikationseinheit 1.3 als ein positiver Fehlerstatus an die Motorsteuereinheit 5 übertragen. Die Motorsteuereinheit 5 kann beim Auftreten eines positiven Fehlerstatus die Generierung eines Abschaltsignals auslösen, welches über die Abschaltsignaleingangsleitung 1.7 an die Vorrichtung 1 geführt wird.

Daraufhin wird die Abschaltvorrichtung 7 aktiviert, welche die Treiberschaltung 1.1 sowie mittels der von der Treiberschaltung 1.1 an die Umrichterschaltung 2 übertragenen Steuerspannungen zur Ansteuerung der FETs 2.1.a bis 2.3.b ebenso die Umrichterschaltung 2 in einen sicheren Zustand versetzt.

Ein solcher sicherer Zustand kann beispielsweise dadurch erreicht werden, dass mittels der Umrichterschaltung 2 der Rotor des bürstenlosen Gleichstrommotors 3 gebremst wird. In einer anderen Ausführungsform der Erfindung kann ein sicherer Zustand dadurch erreicht werden, dass der Rotor des bürstenlosen Gleichstrommotors 3 in eine gewisse vorbestimmte Position gebracht oder mit einer gewissen vorbestimmten Drehgeschwindigkeit bewegt wird. Es ist auch möglich, einen sicheren Zustand zu erreichen, indem alle Spulenversorgungsleitungen 2.6.1 bis 2.6.3 stromlos geschaltet werden.

Es ist zudem möglich, dass bei Vorliegen eines positiven Fehlerstatus die Motorsteuereinheit 5 neben dem Abschaltsignal ein Steuersignal 4 generiert, welches die Umrichterschaltung 2 so ansteuert, dass der bürstenlose Gleichstrommotor in einen sicheren Zustand versetzt wird. Beispielsweise ist es möglich, mittels eines Steuersignals 4 die Umrichterschaltung 2 durch Sperren der FETs 2.1.a bis 2.3.b in einen hochohmigen Zustand zu versetzen. In vorteilhafter Weise kann damit der bürstenlose Gleichstrommotor 3 auch dann in einen sicheren Zustand gebracht werden, wenn Generierung, Übertragung oder Verarbeitung des Abschaltsignals gestört sein sollte.

Erfindungsgemäß sind hierbei die Treiberschaltung 1.1, die prüfbare Diagnoseeinheit 6, die zuverlässige Kommunikationseinheit 1.3 sowie die Abschaltvorrichtung 7 in einem gesicherten Kontrollpfad 9 angeordnet, wie in Figur 4 dargestellt. Beispielsweise können die Treiberschaltung 1.1, die prüfbare Diagnoseeinheit 6, die zuverlässige Kommunikationseinheit 1.3 sowie die Abschaltvorrichtung 7 so ausgebildet sein, dass sie den Anforderungen gewisser Klassifikationsschemata für die funktionale Sicherheit genügen. So ist es möglich, die Treiberschaltung 1.1, die prüfbare Diagnoseeinheit 6, die zuverlässige Kommunikationseinheit 1.3 sowie die Abschaltvorrichtung 7 gemäß den Anforderungen eines in der Norm ISO 26262-3 Automotive Safety Integrity Level (ASIL) beschriebenen Sicherheitsintegrität wie ASIL-A, ASIL-B, ASIL-C oder ASIL-D auszubilden. In vorteilhafter Weise entfällt die zusätzliche Überwachung entlang eines weiteren Kontrollpfads nach dem Stand der Technik.

Es ist möglich, zur Erzielung einer solchen gewünschten Sicherheitsintegrität Bauelemente mit besonders geringer Ausfallrate vorzusehen. Beispielsweise ist es möglich, für die Abschaltvorrichtung 7 sowie für die Übermittlung eines Abschaltsignals bis zur Treiberschaltung 1.1 und Umrichterschaltung 2 Bauelemente zu verwenden, für die eine Ausfallrate von höchstens einem Ausfall pro zehn Milliarden Stunden, entsprechend einem Wert von 0,1 Failure in Time (FI), spezifiziert ist

Eine andere Möglichkeit zur Erzielung einer gewünschten Sicherheitsintegrität ist die Überwachung der Funktionsfähigkeit von Komponenten der Vorrichtung 1 mittels der prüfbaren Diagnoseeinheit 6. Schlägt eine Überprüfung der Funktionsfähigkeit mindestens einer Komponente der Vorrichtung 1 fehl, so wird ein positiver Fehlerzustand über das Steuersignal 4 an die Motorsteuereinheit 5 übermittelt, wobei das Steuersignal 4 über eine gesicherte Verbindung an die Motorsteuereinheit 5 übertragen wird. Dem Fachmann sind Verfahren und Anordnungen zur Herstellung einer solchen gesicherten Verbindung zur Übertragung des Steuersignals 4 bekannt. Beispielsweise ist es bei der Übertragung eines mindestens teilweise binär kodierten Steuersignals 4 möglich, aufeinander folgende Bitwerte zu Datenpaketen zusammenzufassen. Ein solches Datenpaket kann mit einem Prüfwert versehen sein, welcher beispielsweise nach einem dem Fachmann als Cyclic Redundancy Check (CRC) bekannten Verfahren ermittelt und geprüft wird. Damit kann ein Fehler bei der Übertragung der Bitwerte des Datenpakets festgestellt werden, dem der CRC - Prüfwert zugeordnet ist.

Es ist ferner möglich, ein Datenpaket zusätzlich oder alternativ zu einem Prüfwert mit einer Paketidentifizierung zu versehen, welche beispielsweise als ein fortlaufend inkrementierter Eingangszähler für empfangene Datenpakete und als ein fortlaufend inkrementierter Ausgangszähler für gesendete Datenpakete ausgebildet sein kann. Mittels einer solchen Paketidentifizierung ist es möglich, mehrfach gesendete Datenpakete oder den Verlust eines Datenpakets zu erkennen.

Wird ein positiver Fehlerzustand der Vorrichtung 1 mittels der Motorsteuereinheit 5 erkannt, so wird mittels der Abschaltvorrichtung 7 ein sicherer Zustand eingenommen. Mit anderen Worten: die Vorrichtung 1 wird in einen sicheren Zustand versetzt, wenn die Funktionsfähigkeit für mindestens eine der von der prüfbaren Diagnoseeinheit 6 überwachten Komponenten nicht fehlerfrei ist. In vorteilhafter Weise ist es damit möglich, eine Vorrichtung 1 auch dann mit einer hohen Zuverlässigkeit zu versehen, wenn einzelne Komponenten der Vorrichtung 1, beispielsweise aufgrund einer zu hohen Ausfallrate, für sich einer gewünschten Sicherheitsintegrität nicht entsprechen würden.

In einer Ausführungsform der Erfindung überwacht die prüfbare Diagnoseeinheit 6 den Zustand der Treiberschaltung 1.1, indem mindestens eine der von der Treiberschaltung 1.1 generierten Steuerspannungen für die FETs 2.1.a bis 2.3.b gemessen und mit mindestens einem korrespondierenden Grenzwert verglichen wird, welcher aus dem Steuersignal 4 von der Motorsteuereinheit 5 abgeleitet wird. Beispielsweise ist es möglich, jede Steuerspannung gegen einen oberen und einen unteren Grenzwert zu vergleichen.

In einer Ausführungsform der Erfindung überwacht die prüfbare Diagnoseeinheit 6 den Zustand der Umrichterschaltung 2, indem die Ausgangsspannungen auf den Spulenversorgungsleitungen 2.6.1 bis 2.6.3 gemessen und in gleicher oder ähnlicher Weise mit Grenzwerten verglichen werden, die aus dem Steuersignal 4 abgeleitet werden.

In einer Ausführungsform der Erfindung misst die prüfbare Diagnoseeinheit 6 mindestens eine Versorgungsspannung zur Versorgung der Vorrichtung 1, der Treiberschaltung 1.1 oder weiterer Komponenten der Vorrichtung 1 und/oder eine Versorgungsspannung zur Versorgung der Umrichterschaltung 2 und/oder eine Versorgungsspannung zur Versorgung des bürstenlosen Gleichstrommotors 3 und vergleicht eine gemessene Versorgungsspannung in gleicher oder ähnlicher Weise mit einem korrespondierenden Grenzwert wie eine Steuerspannung.

Es ist ferner möglich, mittels der prüfbaren Diagnoseeinheit 6 Temperaturwerte zu erfassen, beispielsweise die Temperatur eines Chips, auf dem mindestens eine Komponente der Vorrichtung 1 angeordnet ist und/oder die Temperatur eines Chips, auf dem mindestens eine Komponente der Umrichterschaltung 2 angeordnet ist, und in gleicher oder ähnlicher Weise mit korrespondierenden Grenzwerten zu vergleichen wie Steuerspannungen. In einer Ausführungsvariante ist es auch möglich, einen Temperaturwert nur gegen einen korrespondierenden oberen Grenzwert zu vergleichen.

Ein Grenzwert zum Vergleich mit einem korrespondierenden gemessenen Wert beispielsweise für eine Versorgungsspannung oder eine Temperatur kann auf einer nicht näher dargestellten Speichereinheit der prüfbaren Diagnoseeinheit 6 hinterlegt werden. Es ist aber auch möglich, einen solchen Grenzwert mittels des Steuersignals 4 von der Motorsteuereinheit 5 an die Vorrichtung 1 zu übertragen.

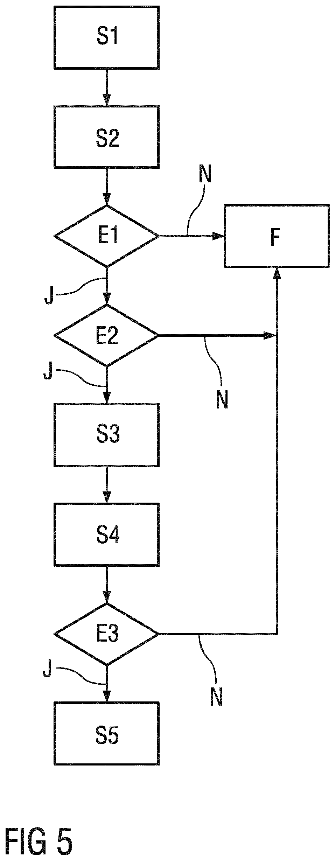

Figur 5 zeigt schematisch den Ablauf eines erfindungsgemäßen Verfahrens zur Überwachung der prüfbaren Diagnoseeinheit 6, welche zur Überwachung der Funktionsfähigkeit von Komponenten der Vorrichtung 1 mindestens einen überwachten Parameter misst und mit dem Arbeitswert mindestens eines korrespondierenden Grenzwerts vergleicht.

In einem ersten Verfahrensschritt S1 wird mittels eines Steuersignals 4 ein Prüfkommando zum Starten einer Funktionsüberprüfung an die prüfbare Diagnoseeinheit 6 gesendet, welches eine Veränderung von mindestens einem Grenzwert für mindestens einen von der prüfbaren Diagnoseeinheit 6 überwachten Parameter bewirkt. Ein Grenzwert wird dabei von einem Arbeitswert in einen Testwert verändert. Im Gegensatz zu einem Arbeitswert dient ein solcher Testwert eines Grenzwerts nicht der Überwachung der Funktionsfähigkeit einer Komponente der Vorrichtung 1, sondern der Überwachung der Funktionsfähigkeit der prüfbaren Diagnoseeinheit 6.

Ein unterer Grenzwert wird dabei soweit erhöht, dass der korrespondierende überwachte Parameter den erhöhten Testwert für diesen unteren Grenzwert in einem normalen Betriebszustand sicher unterschreitet. Ein oberer Grenzwert wird dabei soweit verringert, dass der korrespondierende überwachte Parameter diesen verringerten Testwert für den oberen Grenzwert in einem normalen Betriebszustand sicher überschreitet.

Beispielsweise kann ein oberer Grenzwert von einem Arbeitswert von 170°C für eine Temperatur einer Komponente der Vorrichtung 1 auf einen Testwert von -50°C verringert werden, wenn die in einem normalen, ungestörten Betrieb zu erwartende Temperatur hier 120°C beträgt.

Als ein weiteres Beispiel kann ein unterer Grenzwert von einem Arbeitswert von 3 V für eine Versorgungsspannung auf einen Testwert von 6 V erhöht werden, wenn die in einem normalen, ungestörten Betrieb zu erwartende Versorgungsspannung bei 3,3 V liegt.

Durch den mittels des Prüfkommandos veränderten mindestens einen Grenzwert wird bewirkt, dass in der prüfbaren Diagnoseeinheit 6 in einem normalen, ungestörten Betrieb ein positiver Fehlerstatus gesetzt wird.

In einem nachfolgenden zweiten Verfahrensschritt S2 wird der Fehlerstatus der prüfbaren Diagnoseeinheit 6 an die Motorsteuereinheit 5 übermittelt. Ein solcher Fehlerstatus ist negativ, wenn seit der Initialisierung oder seit der letzten Rücksetzung des Fehlerstatus keiner der hinsichtlich einer Grenzwertüberschreitung überwachten Parameter einen korrespondierenden oberen Grenzwert überschritten hat und keiner der hinsichtlich einer Grenzwertunterschreitung überwachten Parameter einen korrespondierenden unteren Grenzwert unterschritten hat. In allen anderen Fällen ist der Fehlerstatus positiv, also eine Fehlfunktion mindestens einer überwachten Komponente anzeigend.

Hierbei ist es möglich, dass dieser Fehlerstatus von der Motorsteuereinheit 5 einmalig oder mehrfach in weitgehend regelmäßigen Abständen mittels eines Aufforderungskommandos abgefragt, also gepollt, wird. Alternativ ist es möglich, dass dieser Fehlerstatus von der Vorrichtung 1 an die Motorsteuereinheit 5 ohne Aufforderungskommando der Motorsteuereinheit 5 gesendet wird.

In einem nachfolgenden ersten Entscheidungsschritt E1 wird geprüft, ob der Fehlerstatus positiv ist, mit anderen Worten: ob von der prüfbaren Diagnoseeinheit 6 wie erwartet eine Grenzwertüberschreitung mindestens eines überwachten Parameters erkannt wurde.

Ein negativer Fehlerstatus zeigt in dieser Situation, also nach dem Absetzen eines Prüfkommandos, einen Ausfall der prüfbaren Diagnoseeinheit 6 an. Bei einem solchen negativen Fehlerstatus folgt entlang eines negativen Entscheidungspfades N ein Fehlerbehandlungsschritt F, in welchem mittels eines Abschaltsignals auf der Abschaltsignaleingangsleitung 1.7 die Abschaltvorrichtung 7 aktiviert wird und hierdurch und/oder durch ein Steuersignal 4 die Vorrichtung 1, die Umrichterschaltung 2 und der bürstenlose Gleichstrommotor 3 in einen sicheren Zustand versetzt werden.

Bei einem positiven Fehlerstatus wurde von der prüfbaren Diagnoseeinheit 6 die mittels des Prüfkommandos bewirkte Grenzwertüberschreitung mindestens eines Parameters erfolgreich erkannt. Daraufhin folgt auf den ersten Entscheidungsschritt E1 entlang eines positiven Entscheidungspfades J ein zweiter Entscheidungsschritt E2, in welchem geprüft wird, ob diese Erkennung der Grenzwertüberschreitung innerhalb eines vorbestimmten Antwort-Zeitintervalls nach dem Absetzen des Prüfkommandos erfolgte. Eine Überschreitung dieses vorbestimmten Antwort-Zeitintervalls legt ein Versagen der prüfbaren Diagnoseeinheit 6 nahe. Beispielsweise ist es möglich, dass der registrierte positive Fehlerstatus nicht Ergebnis der Ausführung des Prüfkommandos ist, sondern durch eine andere, korrekt oder fehlerhaft von der prüfbaren Diagnoseeinheit ermittelte Grenzwertüberschreitung bewirkt wurde. Daher folgt, falls das vorbestimmte Antwort-Zeitintervall nicht eingehalten wurde, entlang eines negativen Entscheidungspfades N der Fehlerbehandlungsschritt F, in welchem die Vorrichtung 1, die Umrichterschaltung 2 und der bürstenlose Gleichstrommotor 3 nach der beschriebenen Weise in einen sicheren Zustand versetzt werden.

Wird im zweiten Entscheidungsschritt E2 ermittelt, dass der positive Fehlerstatus innerhalb des vorbestimmten Antwort-Zeitintervalls nach dem Absetzen des Prüfkommandos registriert wurde, so folgt auf den zweiten Entscheidungsschritt E2 entlang eines positiven Entscheidungspfades J ein dritter Verarbeitungsschritt S3, in welchem der Fehlerstatus zurückgesetzt, also auf einen negativen Fehlerstatus gesetzt wird. In diesem dritten Verarbeitungsschritt S3 wird ferner der mindestens eine im ersten Verarbeitungsschritt S1 auf einen Testwert veränderte Grenzwerte auf den korrespondierenden Arbeitswert zurückgesetzt.

In einem nachfolgenden vierten Verarbeitungsschritt S4 wird erneut der Fehlerstatus der prüfbaren Diagnoseeinheit 6 an die Motorsteuereinheit 5 übermittelt. Hierbei ist es möglich, dass dieser Fehlerstatus von der Motorsteuereinheit 5 einmalig oder mehrfach in weitgehend regelmäßigen Abständen mittels eines Aufforderungskommandos abgefragt, also gepollt, wird. Alternativ ist es möglich, dass dieser Fehlerstatus von der Vorrichtung 1 an die Motorsteuereinheit 5 ohne Aufforderungskommando der Motorsteuereinheit 5 gesendet wird.

In einem nachfolgenden dritten Entscheidungsschritt E3 wird geprüft, ob der Fehlerstatus positiv ist, mit anderen Worten: ob von der prüfbaren Diagnoseeinheit 6 eine Überschreitung des Arbeitswerts mindestens eines Grenzwerts für einen überwachten Parameter erkannt wurde.

Bei positivem Fehlerstatus folgt auf den dritten Entscheidungsschritt E3 entlang eines positiven Entscheidungspfads J ein Fehlerbehandlungsschritt F, in welchem mittels eines externen Abschaltsignals auf der Abschaltsignaleingangsleitung 1.7 die Abschaltvorrichtung 7 aktiviert wird und die Vorrichtung 1, die Umrichterschaltung 2 und der bürstenlose Gleichstrommotor 3 in einen sicheren Zustand versetzt werden.

Bei negativem Fehlerstatus folgt auf den dritten Entscheidungsschritt E3 ein fünfter Verarbeitungsschritt S5, in welchem die Funktionsfähigkeit der prüfbaren Diagnoseeinheit 6 festgestellt wird. Es ist möglich, dass in diesem fünften Verarbeitungsschritt S5 die Funktionsfähigkeit der prüfbaren Diagnoseeinheit 6 in der Art eines Prüfzustands, optional versehen mit einem Zeitstempel, gespeichert wird.

Mit dem Verfahren nach Figur 5 wird erreicht, dass eine Fehlfunktion der prüfbaren Diagnoseeinheit 6 erkannt wird und dass im Falle einer solchen Fehlfunktion ein Fehlerbehandlungsschritt F ausgeführt wird, der die Vorrichtung 1, die Umrichterschaltung 2 und den bürstenlosen Gleichstrommotor 3 in einen sicheren Zustand versetzt. Somit ist es möglich, Komponenten wie beispielsweise die Umrichterschaltung 2, welche für sich genommen die notwendigen Voraussetzungen für ein gewünschtes Zuverlässigkeitsniveau nicht erfüllen, mittels Überwachung durch die prüfbare Diagnoseeinheit 6 in einer Anordnung zur Ansteuerung eines bürstenlosen Gleichstrommotors 3 einzusetzen, welche das gewünschte Zuverlässigkeitsniveau erfüllt.

In einer Ausführungsform der Erfindung ist es möglich, dass nachfolgend auf den fünften Verarbeitungsschritt S5 ein erneuter Ablauf des Verfahrens, beginnend mit dem Verfahrensschritt S1, gestartet wird. Dabei ist es möglich, den Start des erneuten Ablaufs um eine vorbestimmte Zeitspanne zu verzögern. In vorteilhafter Weise wird damit erreicht, dass die Funktionsfähigkeit der prüfbaren Diagnoseeinheit 6 regelmäßig und in hinreichend kleinen Zeitabständen überprüft wird.

Ferner sind Ausführungsformen der Erfindung möglich, bei welchen mittels eines Prüfkommandos im ersten Verarbeitungsschritt S1 eine Veränderung von mindestens einem Grenzwert für genau einen von der prüfbaren Diagnoseeinheit 6 überwachten Parameter bewirkt wird. Bei einer solchen Ausführungsform der Erfindung ist die Funktionsfähigkeit der prüfbaren Diagnoseeinheit 6 detailliert hinsichtlich eines überwachten Parameters prüfbar. Somit können in vorteilhafter Weise bei einem Ausfall der prüfbaren Diagnoseeinheit 6 zusätzliche Informationen ermittelt werden.

Es sind jedoch auch Ausführungsformen der Erfindung möglich, bei welchen mittels eines Prüfkommandos im ersten Verarbeitungsschritt S1 eine Veränderung von mindestens einem Grenzwert für mehr als einen von der prüfbaren Diagnoseeinheit 6 überwachten Parameter bewirkt wird. Beispielsweise ist es möglich, hierbei den mindestens einen Grenzwert für alle von der prüfbaren Diagnoseeinheit 6 überwachten Parameter zu verändern. Bei einer solchen Ausführungsform der Erfindung kann die Funktionsfähigkeit der prüfbaren Diagnoseeinheit 6 summarisch mit einer minimalen Anzahl von Prüfkommandos überwacht werden. Dies ermöglicht eine sehr häufige Überprüfung der prüfbaren Diagnoseeinheit 6, und somit eine geringe Verzögerung beim Erreichen eines sicheren Zustandes für den bürstenlosen Gleichstrommotor 3 nach einem Ausfall der prüfbaren Diagnoseeinheit 6.

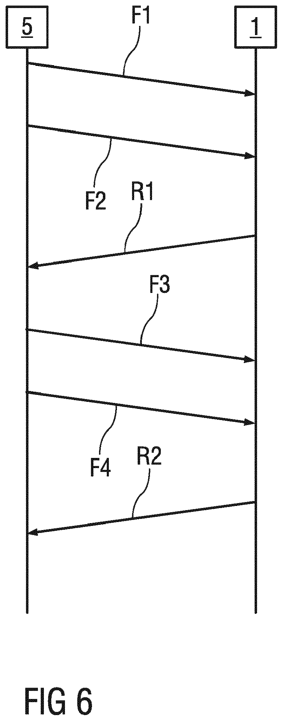

Figur 6 zeigt schematisch in einem Sequenzdiagramm die Kommunikation zwischen einer Motorsteuereinheit 5 und einer Vorrichtung 1.

Entlang eines ersten Funktionsaufrufs F1 wird ein Prüfkommando zum Starten einer Funktionsüberprüfung von der Motorsteuereinheit 5 an die Vorrichtung 1 gesendet, das innerhalb der Vorrichtung 1 an die prüfbare Diagnoseeinheit 6 weitergeleitet wird. Dieser erste Funktionsaufruf F1 löst den ersten Verfahrensschritt S1 aus.

Entlang eines zweiten Funktionsaufrufs F2 wird die Rückgabe des Fehlerzustands von der Vorrichtung 1 angefordert. Dieser zweite Funktionsaufruf F2 wird innerhalb der Vorrichtung 1 an die prüfbare Diagnoseeinheit 6 weitergeleitet und löst den zweiten Verfahrensschritt S2 aus.

Entlang einer ersten Werterückgabe R1 wird der Fehlerzustand der prüfbaren Diagnoseeinheit 6 nach Ausführung des zweiten Verfahrensschritts S2 von der Vorrichtung 1 an die Motorsteuereinheit 5 übermittelt.

Entlang eines dritten Funktionsaufrufs F3 wird der Fehlerzustand der prüfbaren Diagnoseeinheit 6 zurückgesetzt. Dieser dritte Funktionsaufruf F3 löst den dritten Verarbeitungsschritt S3 aus.

Entlang eines vierten Funktionsaufrufs F4 wird die Rückgabe des Fehlerzustands von der Vorrichtung 1 angefordert. Dieser vierte Funktionsaufruf F4 wird innerhalb der Vorrichtung 1 an die prüfbare Diagnoseeinheit 6 weitergeleitet und löst den vierten Verarbeitungsschritt S4 aus.

Entlang einer zweiten Werterückgabe R2 wird der Fehlerzustand der prüfbaren Diagnoseeinheit 6 nach Ausführung des vierten Verfahrensschritts S4 von der Vorrichtung 1 an die Motorsteuereinheit 5 übermittelt.

## Patentansprüche

1. Vorrichtung (1) zur Ansteuerung und/oder Überwachung eines bürstenlosen Gleichstrommotors (3) mittels einer Umrichterschaltung (2), umfassend
- eine Abschaltvorrichtung (7),
- eine auf die Umrichterschaltung (2) einwirkende Treiberschaltung (1.1) sowie
- eine prüfbare Diagnoseeinheit (6) zur Überwachung mindestens eines Parameters der Vorrichtung (1) und/oder der Umrichterschaltung (2) und/oder des bürstenlosen Gleichstrommotors (3), wobei die Abschaltvorrichtung (7) auf die Treiberschaltung (1.1) wirkt und **dadurch gekennzeichnet, dass** die prüfbare Diagnoseeinheit (6) eingerichtet ist, auf ein Prüfkommando, umfassend die Einstellung eines Testwerts für mindestens einen zu dem überwachten Parameter korrespondierenden Grenzwert, einen eine Fehlfunktion der prüfbaren Diagnoseeinheit (6) beschreibenden Fehlerzustand zu ermitteln und auszugeben.

2. Vorrichtung (1) nach Anspruch 1, **dadurch gekennzeichnet, dass** die prüfbare Diagnoseeinheit (6) mit einer zuverlässigen Kommunikationseinheit (1.3) koppelbar ist und ein Prüfkommando sowie der auf das Prüfkommando ermittelte Fehlerzustand der prüfbaren Diagnoseeinheit (6) mittels der zuverlässigen Kommunikationseinheit (1.3) an eine Motorsteuereinheit (5) übertragbar sind, wobei die zuverlässige Kommunikationseinheit (1.3) eingerichtet ist, Datenpakete zu übertragen und Übertragungsfehler mittels einer Prüfsumme und/oder einer Paketidentifizierung festzustellen.

3. Vorrichtung (1) nach Anspruch 1 oder 2, **dadurch gekennzeichnet, dass** die prüfbare Diagnoseeinheit (6) eingerichtet ist, den Schaltzustand der Treiberschaltung (1.1) zu überwachen.

4. Vorrichtung (1) nach einem der vorhergehenden Ansprüche, **dadurch gekennzeichnet, dass** die prüfbare Diagnoseeinheit (6) die Funktionsfähigkeit mindestens eines Lagegebers zur Ermittlung der Lage eines Rotors des bürstenlosen Gleichstrommotors (3) überwacht.

5. Vorrichtung (1) nach Anspruch 4, **dadurch gekennzeichnet, dass** der mindestens eine Lagegeber als Hall-Sensor ausgebildet ist.

6. Vorrichtung (1) nach einem der vorhergehenden Ansprüche, **dadurch gekennzeichnet, dass** die prüfbare Diagnoseeinheit (6) eingerichtet ist, die Temperatur von mindestens einem Bauelement der Vorrichtung (1) und/oder der Umrichterschaltung (2) zu überwachen.

7. Vorrichtung nach einem der vorhergehenden Ansprüche, **dadurch gekennzeichnet, dass** die prüfbare Diagnoseeinheit (6) mindestens eine Versorgungsspannung und/oder mindestens eine Ausgangsspannung der Umrichterschaltung (2) überwacht.

8. Verfahren zur Überwachung einer prüfbaren Diagnoseeinheit (6) in einer Vorrichtung (1) nach einem der vorhergehenden Ansprüche, umfassend
- die Ausführung eines von der Motorsteuereinheit (5) an die prüfbare Diagnoseeinheit (6) übermittelten Prüfkommandos, umfassend die Einstellung eines Testwerts für mindestens einen zu einem überwachten Parameter korrespondierenden Grenzwert in einem ersten Verarbeitungsschritt (S1),
- die Übermittlung eines Fehlerzustands von der prüfbaren Diagnoseeinheit (6) an die Motorsteuereinheit (5) in einem darauf folgenden zweiten Verarbeitungsschritt (S2), wobei ein positiver Fehlerzustandswert die Überschreitung mindestens eines Grenzwerts eines überwachten Parameters bezeichnet,
- die Erkennung einer Fehlfunktion der prüfbaren Diagnoseeinheit (6) bei einem nicht positiven Fehlerzustandswert in einem darauf folgenden ersten Entscheidungsschritt (E1),
- das Rücksetzen des Fehlerzustandes auf einen nicht positiven Fehlerzustandswert und das Rücksetzen des mindestens einen Grenzwerts für den mindestens einen überwachten Parameter auf einen Arbeitswert in einem dritten Verarbeitungsschritt (S3),
- die Übermittlung des Fehlerzustandes von der prüfbaren Diagnoseeinheit (6) an die Motorsteuereinheit (5) in einem darauf folgenden vierten Verarbeitungsschritt (S4),
- die Erkennung einer Fehlfunktion der prüfbaren Diagnoseeinheit (6) bei einem positiven Fehlerzustandswert in einem darauf folgenden dritten Entscheidungsschritt (E3) und
- das Setzen eines erfolgreichen Prüfzustands in einem darauf folgenden fünften Verarbeitungsschritt (S5).

9. Verfahren nach Anspruch 8 zur Überwachung einer prüfbaren Diagnoseeinheit (6) in einer Vorrichtung (1) nach Anspruch 4 oder 5, umfassend
- die Erkennung einer Fehlfunktion der prüfbaren Diagnoseeinheit (6) in einem auf den ersten Entscheidungsschritt (E1) folgenden zweiten Entscheidungsschritt (E2), wenn der Zeitabstand zwischen der Übermittlung des Prüfkommandos und der Übermittlung eines positiven Fehlerzustands von der prüfbaren Diagnoseeinheit (6) an die Motorsteuereinheit (5) im zweiten Verarbeitungsschritt (S2) außerhalb eines vorbestimmten Bereichs von Zeitabständen liegt.

10. Verfahren nach Anspruch 7 oder 8, umfassend mindestens eine Wiederholung des ersten Verfahrensschritts (S1) und aller nachfolgenden Schritte (S2 bis S5, E1 bis E3).

## Claims

1. Apparatus (1) for actuating and/or monitoring a brushless DC motor (3) by means of a converter circuit (2), comprising
- a switching-off apparatus (7),
- a driver circuit (1.1) acting on the converter circuit (2), and
- a testable diagnosis unit (6) for monitoring at least one parameter of the apparatus (1) and/or of the converter circuit (2) and/or of the brushless DC motor (3), wherein the switching-off apparatus (7) acts on the driver circuit (1.1) and **characterized in that** the testable diagnosis unit (6) is set up to respond to a test command, comprising the adjustment of a test value for at least one limit value corresponding to the monitored parameter, by ascertaining and outputting a fault state that describes a malfunction of the testable diagnosis unit (6).

2. Apparatus (1) according to Claim 1, **characterized in that** the testable diagnosis unit (6) is couplable to a reliable communication unit (1.3), and a test command and the fault state of the testable diagnosis unit (6) as ascertained in response to the test command are transmittable to a motor control unit (5) by means of the reliable communication unit (1.3), wherein the reliable communication unit (1.3) is set up to transmit data packets and to detect transmission errors by means of a checksum and/or a packet identification.

3. Apparatus (1) according to Claim 1 or 2, **characterized in that** the testable diagnosis unit (6) is set up to monitor the switching state of the driver circuit (1.1).

4. Apparatus (1) according to one of the preceding claims, **characterized in that** the testable diagnosis unit (6) monitors the operability of at least one position transmitter for ascertaining the position of a rotor of the brushless DC motor (3).

5. Apparatus (1) according to Claim 4, **characterized in that** the at least one position transmitter is in the form of a Hall sensor.

6. Apparatus (1) according to one of the preceding claims, **characterized in that** the testable diagnosis unit (6) is set up to monitor the temperature of at least one component of the apparatus (1) and/or of the converter circuit (2).

7. Apparatus according to one of the preceding claims, **characterized in that** the testable diagnosis unit (6) monitors at least one supply voltage and/or at least one output voltage of the converter circuit (2).

8. Method for monitoring a testable diagnosis unit (6) in an apparatus (1) according to one of the preceding claims, comprising
- the execution of a test command transmitted from the motor control unit (5) to the testable diagnosis unit (6), comprising the adjustment of a test value for at least one limit value corresponding to a monitored parameter in a first processing step (S1),
- the transmission of a fault state from the testable diagnosis unit (6) to the motor control unit (5) in a subsequent second processing step (S2), wherein a positive fault state value denotes the exceeding of at least one limit value of a monitored parameter,
- the recognition of a malfunction of the testable diagnosis unit (6) given a nonpositive fault state value in a subsequent first decision step (E1),
- the resetting of the fault state to a nonpositive fault state value and the resetting of the at least one limit value for the at least one monitored parameter to an operate value in a third processing step (S3),
- the transmission of the fault state from the testable diagnosis unit (6) to the motor control unit (5) in a subsequent fourth processing step (S4),
- the recognition of a malfunction of the testable diagnosis unit (6) given a positive fault state value in a subsequent third decision step (E3), and
- the setting of a successful test state in a subsequent fifth processing step (S5).

9. Method according to Claim 8 for monitoring a testable diagnosis unit (6) in an apparatus (1) according to Claim 4 or 5, comprising
- the recognition of a malfunction of the testable diagnosis unit (6) in a second decision step (E2), which follows the first decision step (E1), if the interval of time between the transmission of the test command and the transmission of a positive fault state from the testable diagnosis unit (6) to the motor control unit (5) in the second processing step (S2) is outside a predetermined range of intervals of time.

10. Method according to Claim 7 or 8, comprising at least one repetition of the first method step (S1) and of all subsequent steps (S2 to S5, E1 to E3).

## Revendications

1. Dispositif (1) d'excitation et/ou de surveillance d'un moteur à courant continu sans balais (3) au moyen d'un circuit convertisseur (2), comprenant
- un dispositif de coupure (7),
- un circuit pilote (1.1) agissant sur le circuit convertisseur (2), ainsi que
- une unité de diagnostic pouvant être testée (6) pour surveiller au moins un paramètre du dispositif (1) et/ou du circuit convertisseur (2) et/ou du moteur à courant continu sans balais (3), le dispositif de coupure (7) agissant sur le circuit pilote (1.1), et **caractérisé en ce que** l'unité de diagnostic pouvant être testée (6) est aménagée, suite à une instruction de test qui comprend le réglage d'une valeur de test pour au moins une valeur limite correspondant au paramètre surveillé, pour établir et sortir un état de défaut décrivant un dysfonctionnement de l'unité de diagnostic pouvant être testée (6).

2. Dispositif (1) selon la revendication 1, **caractérisé en ce que** l'unité de diagnostic pouvant être testée (6) peut être couplée à une unité de communication fiable (1.3), et une instruction de test ainsi que l'état de défaut établi suite à l'instruction de test de l'unité de diagnostic pouvant être testée (6) peuvent être transmis à une unité de commande de moteur (5) au moyen de l'unité de communication fiable (1.3), l'unité de communication fiable (1.3) étant aménagée pour transmettre des paquets de données et pour constater des erreurs de transmission au moyen d'une somme de contrôle et/ou d'une identification de paquet.

3. Dispositif (1) selon la revendication 1 ou 2, **caractérisé en ce que** l'unité de diagnostic pouvant être testée (6) est aménagée pour surveiller l'état de commutation du circuit pilote (1.1).

4. Dispositif (1) selon l'une quelconque des revendications précédentes, **caractérisé en ce que** l'unité de diagnostic pouvant être testée (6) surveille le bon fonctionnement d'au moins un codeur de position afin d'établir la position d'un rotor du moteur à courant continu sans balais (3).

5. Dispositif (1) selon la revendication 4, **caractérisé en ce que** ledit au moins un codeur de position est réalisé sous la forme d'un capteur de Hall.

6. Dispositif (1) selon l'une quelconque des revendications précédentes, **caractérisé en ce que** l'unité de diagnostic pouvant être testée (6) est aménagée pour surveiller la température d'au moins un composant du dispositif (1) et/ou du circuit convertisseur (2).

7. Dispositif selon l'une quelconque des revendications précédentes, **caractérisé en ce que** l'unité de diagnostic pouvant être testée (6) surveille au moins une tension d'alimentation et/ou au moins une tension de sortie du circuit convertisseur (2).

8. Procédé de surveillance d'une unité de diagnostic pouvant être testée (6) dans un dispositif (1) selon l'une quelconque des revendications précédentes, comprenant
- l'exécution d'une instruction de test transmise de l'unité de commande de moteur (5) à l'unité de diagnostic pouvant être testée (6), comprenant le réglage d'une valeur de test pour au moins une valeur limite correspondant à un paramètre surveillé dans une première étape de traitement (S1),
- la transmission d'un état de défaut de l'unité de diagnostic pouvant être testée (6) à l'unité de commande de moteur (5) dans une deuxième étape de traitement suivante (S2), une valeur d'état de défaut positive indiquant le dépassement d'au moins une valeur limite d'un paramètre surveillé,
- l'identification d'un dysfonctionnement de l'unité de diagnostic pouvant être testée (6) pour une valeur d'état de défaut non positive dans une première étape de décision (E1) suivante,
- la réinitialisation de l'état de défaut sur une valeur d'état de défaut non positive et la réinitialisation de ladite au moins une valeur limite pour ledit au moins un paramètre surveillé sur une valeur de travail dans une troisième étape de traitement (S3),
- la transmission de l'état de défaut de l'unité de diagnostic pouvant être testée (6) à l'unité de commande de moteur (5) dans une quatrième étape de traitement suivante (S4),
- l'identification d'un dysfonctionnement de l'unité de diagnostic pouvant être testée (6) pour une valeur d'état de défaut positive dans une troisième étape de décision suivante (E3), et
- la définition d'un état de test réussi dans une cinquième étape de traitement suivante (S5).

9. Procédé selon la revendication 8 pour la surveillance d'une unité de diagnostic pouvant être testée (6) dans un dispositif (1) selon la revendication 4 ou 5, comprenant
- l'identification d'un dysfonctionnement de l'unité de diagnostic pouvant être testée (6) dans une deuxième étape de décision (E2) suivant la première étape de décision (E1) si l'intervalle de temps entre la transmission de l'instruction de test et la transmission d'un état de défaut positif de l'unité de diagnostic pouvant être testée (6) à l'unité de commande de moteur (5) dans la deuxième étape de traitement (S2) se trouve en dehors d'une plage prédéterminée d'intervalles de temps.

10. Procédé selon la revendication 7 ou 8, comprenant au moins une itération de la première étape de procédé (S1) et de toutes les étapes suivantes (S2 à S5, E1 à E3).
